**Europäisches Patentamt**

**European Patent Office**

**Office européen des brevets**

(19)

(11) **EP 1 509 046 A1**

(12) # EUROPEAN PATENT APPLICATION

(43) Date of publication:
**23.02.2005 Bulletin 2005/08**

(51) Int Cl.⁷: **H04N 7/30**, H04N 7/50,
H04N 7/64, H03M 7/40

(21) Application number: **03292080.3**

(22) Date of filing: **22.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **ALCATEL**
**75008 Paris (FR)**

(72) Inventors:
• **Nguyen, Hang**
**92110 Clichy-la-Garenne (FR)**

• **Duhamel, Pierre**
**92350 Le Plessis Robinson (FR)**

(74) Representative: **Richardt, Markus Albert et al
Quermann Richardt Sturm
Patentanwälte
Unter den Eichen 7
65195 Wiesbaden (DE)**

(54) **Error resistant encoded image and video transmission using variable length codes (VLC)**

(57)     The present invention relates to a method for transmitting data having a predefined type, preferably image or video data, encoded using Variable Length Codes, the encoded data consisting in a sequence of codewords belonging to a predefined set of codewords.

According to the present invention, the method comprising the steps of:

- checking if a sequence of possible VLC codewords sequences meets at least a predefined constraints related to a property intrinsic to the type of the data;

- determining the number L of bits required to encode all valid codeword sequences contained in said predefined set of codewords;

- associating each valid codeword sequence with one L-bit word using an encoding method providing a maximum distance between valid VLC codeword sequences;

- transmitting a flow of L-bit words representing said encoded data.

**Fig. 1**

EP 1 509 046 A1

**Description**

**BACKGROUND OF THE INVENTION**

The present invention relates to a method for transmitting image or video data especially over not reliable transmission medium such as radio links.

Usual image resp. video compression standards contain spatial resp. spatial and temporal compression. Temporal compression consists in that only the first image or one image at predefined time intervals is entirely encoded, for subsequent images only the difference to the entirely encoded image is encoded. Spatial compression usually consists in that the image is firstly applied a transform compression technology such as discrete cosine transform or wavelets and secondly applied an entropy compression technology such as Huffmann code, arithmetic code RVLC or U-VLC all belonging to the family of Variable Length Codes. The step of entropy compression will be the framework for the present invention.

A Variable Length Code comprises a plurality of codewords which are transmitted on a transmission channel to a receiver. At receiver side, the codeword dictionary is known, and the decoder separates the codewords out of the bit stream to recover originally transmitted data. A drawback of this usual decoding method is that transmission errors can propagate spatially until the decoder detects that it cannot find any codeword matching the received sequence and until the next synchronization sequence is found.

Actually, Variable Length Codes decoding method require a reliable transmission channel to be efficient. In mobile communication networks, bit errors due to non-reliable transmission medium can result in a loss of synchronization when decoding codewords. Moreover, due to real time constraints, it is not possible to protect the transmitted data with an error correction mechanism (e.g. radio link protocol) which triggers the repetition of erroneous data frames.

Known in the art are decoding methods for Variable Length Codes based on the projection of the received sequence on the codeword dictionary. Such methods are described in following articles:

- On Variable Length Codes for Iterative Source-Channel Decoding, R.Bauer, J. Hagenauer, Proceedings of IEEE Data Compression Conference, 2001, page(s): 273 -282.
- Iterative Source-Channel Decoding based on a Trellis representation for Variable Length Codes, R. Bauer, J. Hagenauer, ISIT 2000, june 25-30, Sorrento, Italy.

These methods exploit the relationship between bits inside the codeword. However, the relationship is not strong enough to recover efficiently errors at the receiver. Moreover, the decoded sequences may lead to not meaningful codeword sequences even if the decoding of each codeword taken individually seems correct.

A particular object of the present invention is to provide a method for improving the quality of image or video data transmitted in communication networks having a non-reliable transmission medium.

Another object of the invention is to provide a transmitter for performing this method.

**SUMMARY OF THE INVENTION**

These objects, and others that appear below, are achieved by a method for transmitting data having a predefined type, preferably image or video data, encoded using Variable Length Codes according to claim 1 and a corresponding transmitter according to claim 5.

According to the present invention, the method for transmitting image or video data encoded using Variable Length Codes comprises a step of searching for sequences of possible VLC codewords sequences which meet at least a predefined constraint related to a property intrinsic to the data, said sequences building a set of herein called valid VLC codeword sequences and a step of encoding the valid VLC sequences with L-bit words, L being the number of bits necessary to encode all valid VLC sequence, said L-bit words being chosen according to an encoding method providing a maximum distance between valid VLC codeword sequences.

In preferred embodiments of the present invention, properties intrinsic to image or video data are used to check the correctness of VLC codeword sequences.

The method according to the present invention presents the advantage to provide more compressed image or video data with an equivalent quality. As a consequence, less bandwidth is required to transmit the same amount of information.

The method according to the present invention presents the advantage that more efficient channel error protection scheme can be used since the throughput reduction due to the higher compression rate is compensated by an error protection scheme requiring more overhead. This results in an overall better quality of the image or video data.

Further advantageous features of the invention are defined in the dependent claims.

**BRIEF DESCRIPTION OF THE DRAWINGS**

Other characteristics and advantages of the invention will appear on reading the following description of a preferred embodiment given by way of non-limiting illustrations, and from the accompanying drawings, in which:

- Figure 1 shows an illustration of the method according to the present invention;

- Figure 2 shows a transmitter according to the present invention.

## DETAILED DESCRIPTION OF THE INVENTION

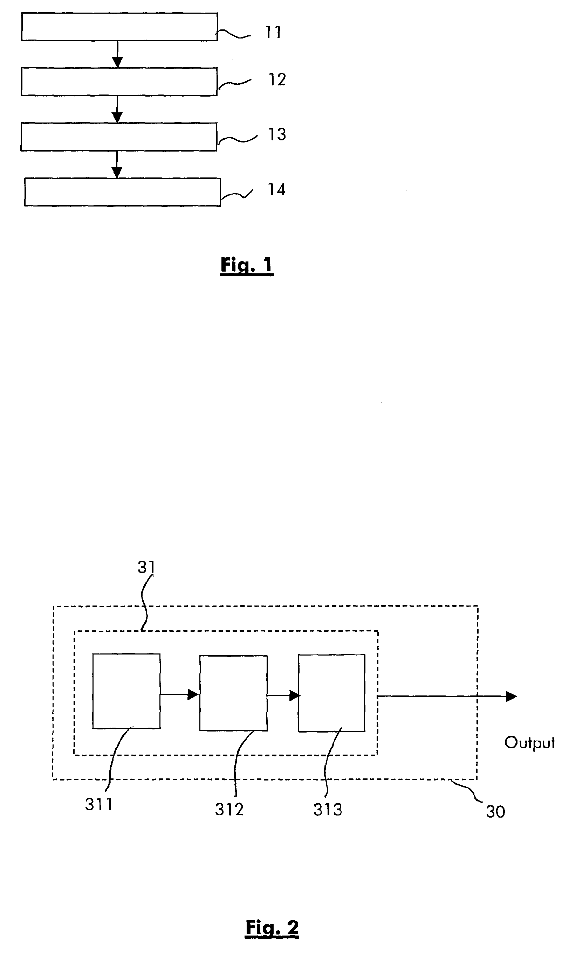

Figure 1 shows an illustration of the method according to the present invention.

As known in the art a source encoding is performed on the image or video data to transmit this encoding consists in using a variable length code (e.g. H261, H263, H26L, H264, JPEG, MPEG ... or the ones cited in the paragraph prior art of the present description). The output of the encoding consists in a codeword sequence. The present invention does not address the way the different codewords are obtained, it will then be clear for persons skilled in the art that any prior art method can be used for this purpose.

Due to property intrinsic to the type of data (i. e. image or video data), not all codeword sequences comprising a certain number of codewords are valid codeword sequences. Indeed, for an image or video data sequence of n bits, only $M_{possible}$ VLC codeword sequences can be constructed in order to respect the length. However, under these $M_{possible}$ sequences some are not realistic because of the image or video data characteristics. As a consequence, only $M_{valid} < M_{possible}$ codeword sequences are likely to be the result of a correct encoding and of a correct transmission.

A first step 11 of the method according to the present invention consists in determining all valid codeword sequences ($M_{valid}$) which are compatible with constraints related to the data type (image or video).

Each codeword generated by the encoding of a data block 26 is represented by a triplet (run, level, last) as described in H263 standard or by a couple (run, level) together with an End-of-Block indicator as described in the H.26L standard. Other prior art encoding mechanisms may be used without departing from the scope of the present invention (e.g. MPEG, JPEG, H261, H264...). The parameter run represents the number of pixels encoded in a codeword.

According to the invention, codeword sequences representing a data block should verify following property:

$$\sum run_{codeword} + 1 \leq N$$

codewords $\in$ partial sequence

wherein parameter "run" as defined in "run-length" compression methods is associated to each codeword. The parameter N is the number of pixels coded in a codeword

Indeed, a codeword sequence for which the above mentioned sum would be greater than the number of pixel N per data block would be an erroneous codeword sequence.

This property intrinsic to the data type can be used alone in that a VLC codeword sequence can be rejected from the set of valid codeword sequences if it does not fulfil the property.

In a further embodiment of the present invention, the field last from the triplet (run, level, last) according to H263 standard, respectively the End-of-Block indicator according to H.26L standard are used to define a property intrinsic to the type of data. Indeed, the field "last" or "end of block" is only set to 1 if the corresponding codeword is the last codeword of the data block. In all other cases (i.e. the decoded codeword is not the last of the data block), the field "last" or "end of block" must be 0.

This property intrinsic to the type of data can be used alone in that a VLC codeword sequence can be rejected from the set of valid codeword sequences if it does not fulfil the property.

According to the present invention the method comprises a further step 12 of determining the number of bits L which are necessary to distinguish all valid data sequences obtained at step 11. L is equal to the integer just greater or equal to the log2 of the number of valid codeword sequences $M_{valid}$ obtained at step 11. For example, if 16 valid codeword sequences are obtained L=4bits.

A further step 13 consists in associating to each valid codeword sequence an L-bit word using an encoding method providing a maximum distance between the valid VLC encoded codeword sequences;

A further step 14 consists in transmitting the sequence of L-bit words representing the codeword sequence instead of the codeword sequence itself.

Steps 11, 12 and 13 are only performed once for each video compression standard. A conversion table is preferably obtained at the end of step 13 and stored at the transmitter. The L-bit word flow representing the codeword sequence generated at step 14 is obtained by a simple table look-up.

Preferably, the method according to the present invention in its different embodiments is used for the transmission of image or video data over wireless communication network having per se an unreliable transmission medium.

Preferably, the gain in bit rate which is obtained by the method according to the present invention for encoding the image or video data is used to select a more robust error correction mechanism on the unreliable radio link.

Figure 2 shows a transmitter according to the present invention.

The transmitter comprises an encoder 31. Encoder 31 comprises means 311 for checking if a sequence of possible VLC codewords meets at least one predefined constraint related to a property intrinsic to the data type, means 312 for associating to each valid VLC sequence a L-bit word and means 313 for transmitting a flow of L-bit words representing said encoded data.

In a preferred embodiment, means 311 checks if a sequence of possible VLC codewords fulfills following property

$$\Sigma run_{codeword} + 1 \leq N$$

codewords $\in$ partial sequence

In a further preferred embodiment of the present invention means 311 checks if a sequence of possible VLC codewords fulfills following property: $^{last}$ last codeword of data sequence$\neq 1$.

The transmitter according to the present invention can be a mobile terminal. Alternatively, the transmitter can be a part of the base station subsystem in the case that the data are encoded at the base station subsystem for being transmitted in the downlink for example.

**Claims**

1. Method for transmitting data having a predefined data type, preferably image or video data, encoded using Variable Length Codes, said encoded data consisting in a sequence of codewords belonging to a predefined set of codewords, said method comprising the steps of:

   - checking if sequences of possible VLC codewords sequences meets at least one predefined constraint related to a property intrinsic to the type of the data, such sequences being herein called valid VLC codeword sequences;
   - determining the number L of bits required to distinguish all valid VLC codeword sequences;
   - associating each valid VLC codeword sequence with one L-bit word using an encoding method providing a maximum distance between valid VLC codeword sequences;
   - transmitting a flow of L-bit words representing said encoded data.

2. Method according to claim 1, wherein a predefined constraint related to a property intrinsic to the data type consists in checking if for a partial decoded codeword sequence having a bit length smaller or equal to the number of pixels per data blocks, noted N,

$$\Sigma run_{codeword} + 1 \leq N,$$

codewords $\in$ partial sequence
wherein said parameter "run" is related to the number of pixels coded in a codeword.

3. Method according to claim 1, wherein a predefined constraint related to a property intrinsic to the data type consists in checking if
for a VLC codeword sequence having a bit length smaller than the number of pixels per data blocks, an indicator of the end of block equals 0
and
for a VLC codeword sequence of bit length equal to the number of pixels per data blocks, an indicator of the end of block equals 1.

4. Method according to claim 1, wherein said encoded data are transmitted over an air interface in a wireless communication network.

5. Transmitter for encoding data having a predefined data type, preferably image or video data, using Variable Length Code, said transmitter being **characterized in that** it comprises:

   - means (311) for checking if a sequence of possible VLC codewords meets at least one predefined constraint related to a property intrinsic to the data, such a sequence belonging to the set of herein called valid VLC codeword sequences;
   - means (312) for associating to each valid VLC sequence a L-bit word, L being the number of bits necessary to distinguish all valid VLC sequences, said L-bit words being chosen according to an encoding method providing a maximum distance between valid VLC codeword sequences;
   - means (313) for transmitting a flow of L-bit words representing said encoded data.

**Fig. 1**

**Fig. 2**

**European Patent Office**

**EUROPEAN SEARCH REPORT**

Application Number

EP 03 29 2080

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | BAUER R. , HAGENAUER J.: "Iterative source/channel decoding based on a trellis representation for variable length codes" IEEE SYMPOSIUM ON INFORMATION THEORY (ISIT 2000), 25 - 30 June 2000, pages 238-238, XP010510114 Sorrento, IT * the whole document * --- | 1-5 | H04N7/30 H04N7/50 H04N7/64 H03M7/40 |
| A | PARK M ET AL: "JOINT SOURCE-CHANNEL DECODING FOR VARIABLE-LENGTH ENCODED DATA BY EXACT AND APPROXIMATE MAP SEQUENCE ESTIMATION" IEEE TRANSACTIONS ON COMMUNICATIONS, IEEE INC. NEW YORK, US, vol. 48, no. 1, January 2000 (2000-01), pages 1-6, XP000912965 ISSN: 0090-6778 * the whole document * --- | 1-5 | |
| A | BERNARD M A ET AL: "A LOWER BOUND ON AVERAGE CODEWORD LENGTH OF VARIABLE LENGTH ERROR-CORRECTING CODES" IEEE TRANSACTIONS ON INFORMATION THEORY, IEEE INC. NEW YORK, US, vol. 36, no. 6, 1 November 1990 (1990-11-01), pages 1474-1475, XP000162260 ISSN: 0018-9448 * the whole document * --- -/-- | 1-5 | **TECHNICAL FIELDS SEARCHED (Int.Cl.7)** H04N H03M |

The present search report has been drawn up for all claims

| Place of search | Date of completion of the search | Examiner |
|---|---|---|
| BERLIN | 22 January 2004 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 03 29 2080

| | DOCUMENTS CONSIDERED TO BE RELEVANT | | | |
|---|---|---|---|---|
| Category | Citation of document with indication, where appropriate, of relevant passages | Relevant to claim | CLASSIFICATION OF THE APPLICATION (Int.Cl.7) | |
| A | BUTTIGIEG V ET AL: "Variable-length error-correcting codes" IEE PROCEEDINGS: COMMUNICATIONS, INSTITUTION OF ELECTRICAL ENGINEERS, GB, vol. 147, no. 4, 15 August 2000 (2000-08-15), pages 211-215, XP006013980 ISSN: 1350-2425 * the whole document * --- | 1-5 | | |
| A | BUTTIGIEG V ET AL: "On variable-length error-correcting codes" INFORMATION THEORY, 1994. PROCEEDINGS., 1994 IEEE INTERNATIONAL SYMPOSIUM ON TRONDHEIM, NORWAY 27 JUNE-1 JULY 1994, NEW YORK, NY, USA,IEEE, 27 June 1994 (1994-06-27), page 507 XP010135468 ISBN: 0-7803-2015-8 * the whole document * --- | 1-5 | | |
| A,D | BAUER R., HAGENAUER J.: "On variable length codes for iterative source/channel decoding" PROCEEDINGS DCC 2001. DATA COMPRESSION CONFERENCE, PROCEEDINGS DCC 2001. DATA COMPRESSION CONFERENCE, SNOWBIRD, UT, USA, 27-29 MARCH 2001, pages 273-282, XP002266753 2001, Los Alamitos, CA, USA, IEEE Comput. Soc, USA ISBN: 0-7695-1031-0 * the whole document * --- -/-- | 1-5 | TECHNICAL FIELDS SEARCHED (Int.Cl.7) | |

The present search report has been drawn up for all claims

| Place of search | Date of completion of the search | Examiner |
|---|---|---|
| BERLIN | 22 January 2004 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BUTTIGIEG, V. ET AL.: "A Maximum Likelihood Decoding Algorithm for Variable-Length Error-Correcting Codes" PROC. 5TH BANGOR SYMPOSIUM ON COMMUNICATIONS, 2 - 3 June 1993, pages 56-59, XP002266754 Bangor, Wales, GB * the whole document * | 1-5 | |
| T | BAHL L R ET AL: "OPTIMAL DECODING OF LINEAR CODES FOR MINIMIZING SYMBOL ERROR RATE" IEEE TRANSACTIONS ON INFORMATION THEORY, IEEE INC. NEW YORK, US, April 1974 (1974-04), pages 1-4, XP002942886 ISSN: 0018-9448 * the whole document * | 1-5 | |

**EUROPEAN SEARCH REPORT**

European Patent Office

Application Number

EP 03 29 2080

TECHNICAL FIELDS SEARCHED (Int.Cl.7)

The present search report has been drawn up for all claims

| Place of search | Date of completion of the search | Examiner |
|---|---|---|
| BERLIN | 22 January 2004 | Gries, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)